# EUROPÄISCHE PATENTSCHRIFT

(11) **EP 0 780 182 B1**
(45) Veröffentlichungstag und Bekanntmachung des Hinweises auf die Patenterteilung: **11.06.2003**
(21) Anmeldenummer: 96119578.1
(22) Anmeldetag: 06.12.1996
(51) Int. Cl.: B23G 5/18

(54) **Werkzeug zur Herstellung einer Gewindebohrung**
Tool to form an internal thread
Outil pour former une filetage interne

(30) Priorität: 22.12.1995 DE 19548199
(43) Veröffentlichungstag der Anmeldung: 25.06.1997
(73) Patentinhaber: Joh. & Ernst Link GmbH & Co. KG, D-70565 Stuttgart (DE)
(72) Erfinder:
(74) Vertreter: Kohl, Karl-Heinz

(56) Entgegenhaltungen:
- EP-A- 0 278 930
- EP-A- 0 334 002
- WO-A-88/05361
- DE-A- 3 921 734
- DE-A- 4 340 870
- DE-U- 9 203 555
- DE-U- 9 317 312
- WERKSTATT UND BETRIEB, Bd. 124, Nr. 10, Oktober 1991, MUNCHEN DE, Seite 806 XP000325359 "Spanzeiten-Ersparnis durch Kombinationswerkzeug"

## Beschreibung

Die Erfindung betrifft ein Werkzeug nach dem Oberbegriff des Anspruches 1.

Bei der Herstellung von Gewindebohrungen ist es bekannt, das Kernloch zunächst mit dem Kernlochbohrer des Werkzeuges zu bohren. Am Ende des Bohrvorganges wird das Werkzeug axial weiter in das Kernloch bewegt, wobei ein an einen Gewindefrästeil anschließender Senker am Kernloch eine Senkung erstellt (WO 88/05361). Anschließend wird das Werkzeug quer zur Achse des Kernloches verfahren und um diese Achse umlaufend bewegt. Der Gewindefrästeil fräst dann in der Wandung des Kernloches das Gewinde. Mit diesem Werkzeug können nur solche Gewindebohrungen hergestellt werden, deren Tiefe mindestens dem Abstand zwischen dem Kernlochbohrer und dem Senker entspricht. Hat die Gewindebohrung eine geringere Tiefe, liegt der Senker außerhalb des gebohrten Kernloches, so daß mit ihm eine Senkung nicht hergestellt werden kann. In diesem Fall muß ein anderes Werkzeug eingesetzt werden.

Ein solches Werkzeug (EP-A-0 334 002) hat im Bereich des Kernlochbohrerendes einen Senker, dessen größter Durchmesser dem Durchmesser des herzustellenden Kernloches entspricht. Um die Senkung am Beginn des Kernloches herstellen zu können, wird in das Werkstück zunächst nur so tief gebohrt, wie dies der axialen Länge der herzustellenden Senkung entspricht. Anschließend wird diese Senkung durch einen Zirkularfräsvorgang mit dem Senker hergestellt. Anschließend wird das Werkzeug wieder auf die Achse des herzustellenden Kernloches zurückbewegt und dann zunächst gebohrt und schließlich durch einen Zirkularfräsvorgang mit dem Gewindefrästeil das Gewinde in der Wandung des Kernloches hergestellt.

Bei einem anderen bekannten Werkzeug (Werkstatt und Betrieb 124 (1991) 10, Seite 806) ist ebenfalls nur ein einziger Senker vorgesehen.

Es ist schließlich ein Werkzeug bekannt (DE 93 17 312 U), mit dem die Senkung durch einen Zirkularfräsvorgang erzeugt wird.

Der Erfindung liegt die Aufgabe zugrunde, das gattungsgemäße Werkzeug so auszubilden, daß ein Ansenkung am Kernloch in Abhängigkeit von der Bohrungstiefe in einfacher Weise zeitsparend hergestellt werden kann.

Diese Aufgabe wird beim gattungsgemäßen Werkzeug erfindungsgemäß mit den kennzeichnenden Merkmalen des Anspruches 1 gelöst.

Das erfindungsgemäße Werkzeug weist die beiden Senker auf, mit denen wahlweise die Senkung je nach Tiefe der herzustellenden Gewindebohrung durch einen Zirkularfräsvorgang oder durch einen zentrischen Fräsvorgang hergestellt werden kann. Ist die herzustellende Gewindebohrung nur kurz, dann wird mit dem ersten Senker am Rand des Kernloches die Senkung durch einen Zirkularfräsvorgang erzeugt. Ist die herzustellende Gewindebohrung ausreichend tief, dann kann die Senkung am Rand des Kernloches zentrisch mit dem zweiten Senker hergestellt werden. Mit dem erfindungsgemäßen Kombinationswerkzeug kann somit unabhängig von der Tiefe des Kernloches an dessen Rand die Senkung in optimaler Weise angebracht werden. Weitere Merkmale der Erfindung ergeben sich aus den weiteren Ansprüchen, der Beschreibung und den Zeichnungen.

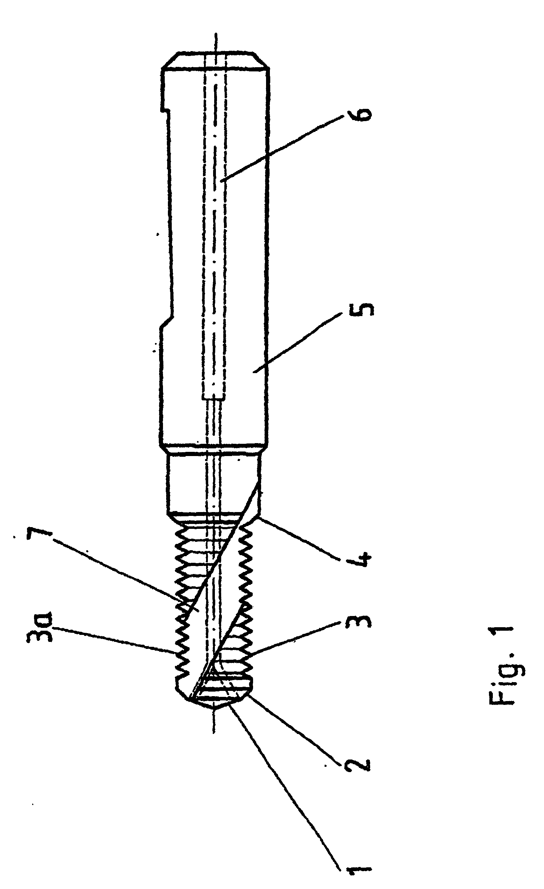

Die Erfindung wird anhand eines in der Zeichnung dargestellten Ausführungsbeispieles näher erläutert. Die Zeichnung zeigt einen erfindungsgemäßen Bohrgewindefräser in Ansicht.

Der Bohrgewindefräser hat Stirnschneiden 1 und einen Senker bildende Schneiden 2, die axial an die Stirnschneiden 1 anschließen. An den Senker 2 schließt ein Gewindefrästeil 3 an, der axial mit Abstand hintereinander angeordnete Schneiden 3a aufweist. Sie liegen jeweils in Radialebenen. Die in den jeweiligen Radialebenen liegenden Zähne der Schneiden 3a sind gleich ausgebildet und haben eine dem herzustellenden Gewinde entsprechende Zahnform. Die axiale Länge des Gewindefrästeils 3 ist um ein Mehrfaches größer als die axiale Länge des Senkers 2. Der Spitzendurchmesser des Gewindefrästeiles 3 ist höchstens gleich dem maximalen Arbeitsdurchmesser des Senkers 2.

An den Gewindefrästeil 3 schließt ein zentrischer Senker 4 an, der größeren Arbeitsdurchmesser als der stirnseitige Senker 2 und der Gewindefrästeil 3 hat. Der Senker 4 ist mit axialem Abstand zum Schaft 5 vorgesehen, mit dem der Bohrgewindefräser in eine Antriebsspindel in bekannter Weise eingesetzt wird. Zur besseren Spanabfuhr bei der Herstellung der Gewindebohrung kann der Bohrgewindefräser mit einer zentralen Kühlmittelzufuhr 6 versehen sein, die in Höhe des stirnseitigen Senkers 2 bzw. des die Schneiden 1 aufweisenden Kernlochbohrers mündet.

Zur Herstellung einer Gewindebohrung wird zunächst mit den Stirnschneiden 1 und den Schneiden 2 ein Kernloch zentrisch im Werkstück gebohrt. Der Senker 2 ist gleichzeitig auch Bohrteil, der bei der Herstellung des Kernloches zusammen mit den Stirnschneiden 1 wirksam ist. Der größte Durchmesser des Senkers 2 entspricht dem Durchmesser des Kernloches. Ist das Kernloch tief genug, kann gleichzeitig mit dem Bohrvorgang eine Senkung am Rand des Kernloches mit dem Senker 4 zentrisch hergestellt werden. In diesem Falle wird der Gewindebohrer ausschließlich um seine Achse gedreht und axial in das Werkstück bewegt.

Bei kurzen Gewinden, deren Kernloch ebenfalls eine Ansenkung benötigt, wird die Senkung durch Zirkularfräsen hergestellt. Hierzu wird der Bohrgewindefräser zunächst axial in das Werkstück bewegt, wobei durch die Schneiden 1 und 2 das Kernloch zentrisch gebohrt wird. Dann wird der Bohrgewindefräser axial so weit zurückgezogen, bis sich die Schneiden 2 in Höhe der herzustellenden Senkung befinden. Nunmehr wird der Bohrgewindefräser außermittig verfahren und bei rotierendem Antrieb auf einer Kreisbahn um 360° um die Bohrungsmittelachse bewegt. Hierbei wird mit dem stirnseitigen Senker 2 die Ansenkung an der Kernbohrung im Zirkularverfahren gefräst. Anschließend wird der Bohrgewindefräser radial in die Bohrungsmitte zurückgeführt, so daß die Achse des Bohrgewindefräsers mit der Achse der Kernbohrung zusammenfällt.

Da die beiden Senker 2 und 4 unterschiedliche Durchmesser haben, kann mit dem Bohrgewindefräser in der beschriebenen Weise eine Ansenkung am Kernloch in Abhängigkeit von der Bohrungstiefe mit dem stirnseitigen Senker 2 im Zirkularfräsverfahren und mit dem schaftseitigen Senker 4 im zentrischen Fräsverfahren hergestellt werden. Da der schaftseitige Senker 4 größeren Arbeitsdurchmesser als der stirnseitige Senker 2 hat, ist beim Arbeiten mit dem schaftseitigen Senker 4 eine Umlaufbewegung des rotierenden Bohrgewindefräsers nicht notwendig. Erst wenn die Gewindebohrung nur eine solche Tiefe haben soll, daß der schaftseitige Senker 4 nicht zum Einsatz kommen kann, wird mit dem stirnseitigen Senker 2 die Ansenkung am Kernloch gefräst. Da der Arbeitsdurchmesser des stirnseitigen Senkers 2 kleiner ist als der Arbeitsdurchmesser des schaftseitigen Senkers 4, ist in diesem Fall eine Umlaufbewegung des rotierenden Bohrgewindefräsers um die Achse des Kernloches erforderlich. Die Ansenkung wird in diesem Falle durch Zirkularfräsen hergestellt.

In beiden Fällen wird zur Herstellung des Gewindes im gebohrten Kernloch der Bohrgewindefräser axial auf die Starttiefe für das Gewindefräsen in das Kernloch eingeführt. Anschließend wird mit dem Gewindefrästeil 3 in der Wandung des Kernloches das Gewinde gefräst. Das Gewindefräsen erfolgt exzentrisch auf einer Spiralbahn um die Achse des Kernloches, wobei der Bohrgewindefräser in Achsrichtung um den Betrag einer Gewindesteigung verfahren wird. Hierbei erzeugt der Gewindefrästeil 3 das herzustellende Gewinde in der Wandung der Kernbohrung.

Um die beim Arbeiten mit dem Bohrgewindefräser anfallenden Späne in einer Spiralnut 7 besser nach außen abführen zu können, kann über die innere Kühlmittelzufuhr in den Stirnbereich des Bohrgewindefräsers Kühlmittel zugeführt werden, durch welche die Späne über die Spiralnut 7 zuverlässig aus dem Bohrloch entfernt werden können.

## Patentansprüche

1. Werkzeug mit einem Kernlochbohrer (1), einem Gewindefrästeil (3), einem im Bereich zwischen dem Kernlochbohrer (1) und dem Gewindefrästeil (3) liegenden ersten Senker (2), dessen größter Durchmesser dem Durchmesser des herzustellenden Kernloches entspricht, und einem Schaft (5) zum Einspannen des Werkzeuges in einen Antrieb,
**dadurch gekennzeichnet, daß** das Werkzeug einen zweiten Senker (4) aufweist, der an der anderen Seite des Gewindefrästeiles (3) angeordnet ist und der größeren Arbeitsdurchmesser als der erste Senker (2) hat, daß der Kernlochbohrer (1) mit Stirnschneiden versehen ist, die in Richtung auf eine Bohrerspitze konvergierend verlaufen, und daß der erste Senker (2) einen vom Kernlochbohrer (1) abweichenden Winkel aufweist.

2. Werkzeug nach Anspruch 1,
**dadurch gekennzeichnet, daß** der erste Senker (2) unmittelbar an den Kernlochbohrer (1) anschließt.

3. Werkzeug nach Anspruch 1 oder 2,
**dadurch gekennzeichnet, daß** der erste Senker (2) Teil des Kernlochbohrers (1) ist.

4. Werkzeug nach einem der Ansprüche 1 bis 3,
**dadurch gekennzeichnet, daß** der Spitzendurchmesser des Gewindefrästeiles (3) höchstens gleich dem Arbeitsdurchmesser des ersten Senkers (2) ist.

5. Werkzeug nach einem der Ansprüche 1 bis 4,
**dadurch gekennzeichnet, daß** das Werkzeug eine innere Kühlmittelzuführung (6) aufweist, die im Bereich des Kernlochbohrers (1) nach außen mündet.

## Claims

1. A tool with a core-hole drill (1), a thread-milling part (3), a first countersink (2) which is situated in the region between the core-hole drill (1) and the thread-milling part (3) and the largest diameter of which corresponds to the diameter of the core hole to be produced, and a shank (5) for clamping the tool in a drive, **characterized in that** the tool comprises a second countersink (4) which is situated on the other side of the thread-milling part (3) and which has a larger operative diameter than the first countersink (2), the core-hole drill (1) is provided with front cutters which extend convergently towards a drill tip, and the first countersink (2) is at an angle deviating from the core-hole drill (1).

2. A tool according to Claim 1, **characterized in that** the first countersink (2) directly adjoins the core-hole drill (1).

3. A tool according to Claim 1 or 2, **characterized in that** the first countersink (2) is part of the core-hole drill (1).

4. A tool according to one of Claims 1 to 3, **characterized in that** the bit diameter of the thread-milling part (3) is at most equal to the operative diameter of the first countersink (2).

5. A tool according to one of Claims 1 to 4, **characterized in that** the tool has an internal coolant supply means (6) which opens to the outside in the region of the core-hole drill (1).

## Revendications

1. Outil comprenant un foret pour avant-trou (1), une partie formant fraise de taraudage (3), une première fraise de lamage (2) disposée dans la zone entre le foret pour avant-trou (1) et la partie formant fraise de taraudage (3), dont le plus grand diamètre correspond au diamètre de l'avant-trou à pratiquer, et une tige (5) pour le serrage de l'outil dans un entraînement,
**caractérisé en ce que** l'outil comprend une deuxième fraise de lamage (4), agencée de l'autre côté de la partie formant fraise de taraudage (3) et présentant un diamètre de travail supérieur à celui de la première fraise de lamage (2), **en ce que** le foret pour avant-trou (1) est pourvu de tranchants frontaux qui s'étendent en convergeant en direction d'une pointe de foret, et **en ce que** la première fraise de lamage (2) présente un angle qui diffère de celui du foret pour avant-trou (1).

2. Outil selon la revendication 1, **caractérisé en ce que** la première fraise de lamage (2) se raccorde directement au foret pour avant-trou (1).

3. Outil selon l'une ou l'autre des revendications 1 et 2, **caractérisé en ce que** la première fraise de lamage (2) est une partie du foret pour avant-trou (1).

4. Outil selon l'une des revendications 1 à 3, **caractérisé en ce que** le diamètre à la pointe de la partie formant fraise de taraudage (3) est au plus égal au diamètre de travail de la première fraise de lamage (2).

5. Outil selon l'une des revendications 1 à 4, **caractérisé en ce que** l'outil comporte une admission intérieure (6) pour un agent de refroidissement, qui débouche vers l'extérieur dans la zone du foret pour avant-trou (1).
